# EUROPEAN PATENT APPLICATION

(11) **EP 0 622 041 A1**
(43) Date of publication of application: **02.11.1994**
(21) Application number: 94106255.6
(22) Date of filing: 21.04.1994
(51) Int. Cl.: A47J 31/54

(54) **Boiler for machines for making hot infused beverages, particularly espresso coffee**

(30) Priority: 27.04.1993 IT TO930287
(71) Applicant: ESSEGIELLE S.r.l, I-10156 Torino (IT)
(72) Inventor: Cortese, Virginio, I-10100 Torino (IT)
(74) Representative: Boggio, Luigi

(57) **Abstract**

A boiler (1)(47) for an espresso coffee machine, wherein a hollow body (2)(71) made of good heat conducting metal defines a chamber (37)(80) for water to be heated by means of a shielded electric resistor (13)(54), and having a liner (21)(72) made of substantially inoxidizable material; the electric resistor (13)(54) being located outside the liner (21)(72).

## Description

The present invention relates to a boiler for machines for making hot infused beverages, particularly espresso coffee.

Machines of the aforementioned type are known to feature so-called "wet" boilers which normally comprise two half shells made of good heat conducting metal such as aluminium, and defining a chamber with at least one inlet normally communicating with the delivery side of an electromagnetic pump, and at least one outlet communicating with a vessel containing powder for infusion. The chamber normally houses a shielded electric resistor for heating a given amount of water fed into the chamber by the pump.

Boilers of the above type present several drawbacks, mainly due to the electric resistor directly contacting the water and so inevitably being subject to lime deposits requiring frequent cleaning and replacement of the resistor; and due to the good heat conducting metal also directly contacting the water, so that, as a consequence of the high in-service water temperatures involved, it tends to react with the oxygen in the water to form relatively harmful soluble oxides which are dissolved in the beverage and so consumed by the user.

To at least partly eliminate the above drawbacks, so-called "dry" boilers have been proposed, which also normally comprise two half shells of good heat conducting metal such as aluminium. The half shells define at least one coiled conduit having at least one inlet normally communicating with the delivery side of an electromagnetic pump, and at least one outlet communicating with a vessel containing powder for infusion. A shielded electric resistor is embedded in the material of at least one of the half shells, for heating a stream of water fed by the pump along the coiled conduit.

While substantially eliminating the problem of lime deposits on the electric resistor, which is no longer in direct contact with the water, "dry" boilers of the above type in no way provide for eliminating metal oxide pollution of the water in that the hot water continues to flow in direct contact with the metal forming the two half shells.

It is an object of the present invention to provide a boiler for machines for making hot infused beverages, particularly espresso coffee, designed to substantially eliminate all the aforementioned drawbacks.

According to the present invention, there is provided a boiler for machines for making hot infused beverages, particularly espresso coffee, and comprising at least a hollow body made of good heat conducting metal and presenting a chamber containing water for heating; and at least a shielded electric resistor for heating said water; characterized by the fact that it also comprises a liner defining said chamber; the liner being made of substantially inoxidizable material; and said electric resistor being located outside said liner.

The present invention will be described with reference to the accompanying drawings, in which:
Figure 1 shows a cross section of a first preferred embodiment of the boiler according to the present invention;
Figure 2 shows a cross section of a second preferred embodiment of the boiler according to the present invention;
Figure 3 shows a front view of a detail of the Figure 2 boiler;
Figure 4 shows a rear view of the Figure 3 detail.

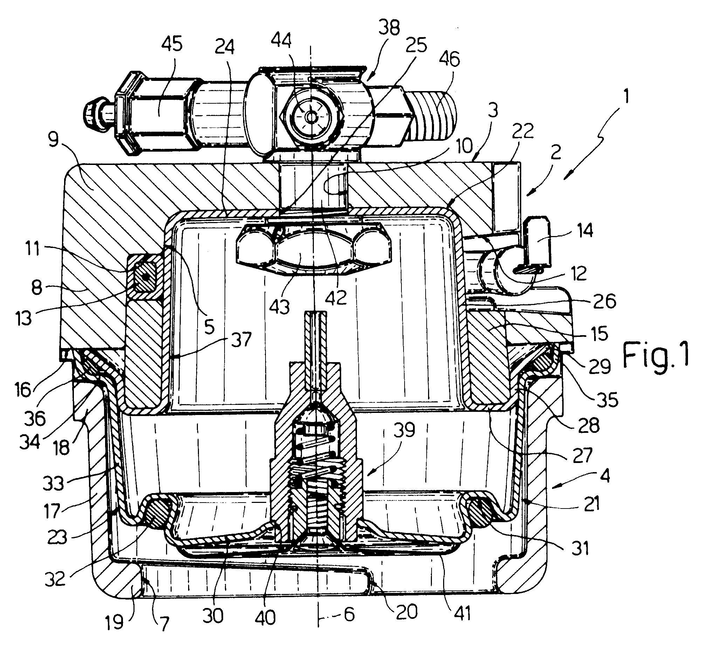

Number 1 in Figure 1 indicates a boiler for making hot infused beverages, particularly espresso coffee, and comprising a hollow aluminium casing 2 defined by a top cup-shaped half shell 3 with its concavity facing downwards, and by a tubular, substantially cylindrical bottom half shell 4. Half shell 4 extends axially downwards from the bottom end of half shell 3, and defines, with half shell 3, an elongated cavity 5 having a vertical axis 6 and communicating externally through a bottom opening 7.

Half shell 3 comprises a substantially truncated-cone-shaped lateral wall 8 coaxial with axis 6; and a top wall 9 perpendicular to axis 6 and presenting a through hole 10 coaxial with axis 6. Along the inner surface of wall 8, there is formed a circumferential annular groove 11 coaxial with axis 6 and communicating externally through a substantially radial opening 12 formed through wall 8. Groove 11 houses a shielded electric resistor 13, the terminals 14 of which come out through opening 12, and which is locked inside groove 11 by an annular body 15, a portion of which projects beyond the annular end surface 16 of wall 8.

Half shell 4 comprises a substantially cylindrical lateral wall 17, the top end of which presents an outward-projecting annular flange 18 facing surface 16, and the bottom end of which presents an inward-projecting annular flange 19 having an opening 20 and defining the fixed part of a bayonet joint (not shown) for connecting casing 2 to the top edge of a filter cup (not shown) containing powdered coffee.

Casing 2 presents a liner 21 made of stainless steel or other inoxidizable heat-resistant material, and defined by a first and second half shell 22, 23 housed inside half shells 3 and 4.

More specifically, half shell 22 is housed inside half shell 3, and comprises a top wall 24 contacting the inner surface of wall 9 and having a through hole 25 coaxial with hole 10; and a lateral wall 26 extending in contact with the inner surface of wall 8, resistor 13 and annular body 15. Wall 26 comprises a bottom end portion bent outwards to form a radial annular flange 27 extending in contact with the bottom annular surface of annular body 15; a cylindrical annular appendix 28 extending upwards and coaxially with axis 6 from the outer periphery of flange 27 and contacting an outer surface end portion of the portion of annular body 15 projecting beyond surface 16; and an annular, truncated-cone-shaped appendix 29 flaring upwards and outwards from the top edge of appendix 28 and extending into contact with surface 16.

Half shell 23 presents a bottom wall 30, the outer periphery of which is undulated to define a bottom annular groove 31 coaxial with axis 6 and housing a seal 32 for ensuring fluidtight connection of wall 30 to the end edge (not shown) of the filter cup (not shown). Half shell 23 also presents a lateral wall 33 extending upwards from the outer periphery of wall 30 coaxially with axis 6 and substantially in contact with the inner surface of wall 17, and presenting a top outer radial flange 34 extending in direct contact with the front surface of flange 18. Flange 34 presents a top annular appendix 35 which, together with flange 34, defines an annular groove housing an annular seal 36 cooperating in fluidtight manner with the outer surface of appendix 29.

Half shells 22 and 23 define a chamber 37 communicating externally at one end via a known distributor 38, and at the other end via a known valve element 39. More specifically, valve element 39 is housed inside chamber 37 coaxially with axis 6, and is force fitted through a central hole 40 in wall 30 to communicate with a filtering trough 41 at the bottom. Distributor 38 comprises an intermediate tubular body 42 fitted through holes 10 and 25 and to half shells 3 and 22 by means of a nut 43 inside chamber 37, for selectively connecting chamber 37 to an inlet conduit 44 communicating with the delivery side (not shown) of an electromagnetic pump (not shown), an overpressure valve 45, and a steam supply conduit 46.

In actual use, a given quantity of water (not shown) is fed into chamber 37 and heated to a given temperature by heating half shells 3 and 4 by means of resistor 13 which, being located outside liner 21 and hence not contacting the water inside chamber 37, is safeguarded against lime deposits. Also, being made of inoxidizable material - stainless steel in the example shown - liner 21 provides for substantially preventing harmful oxides from being dissolved in the infused beverage.

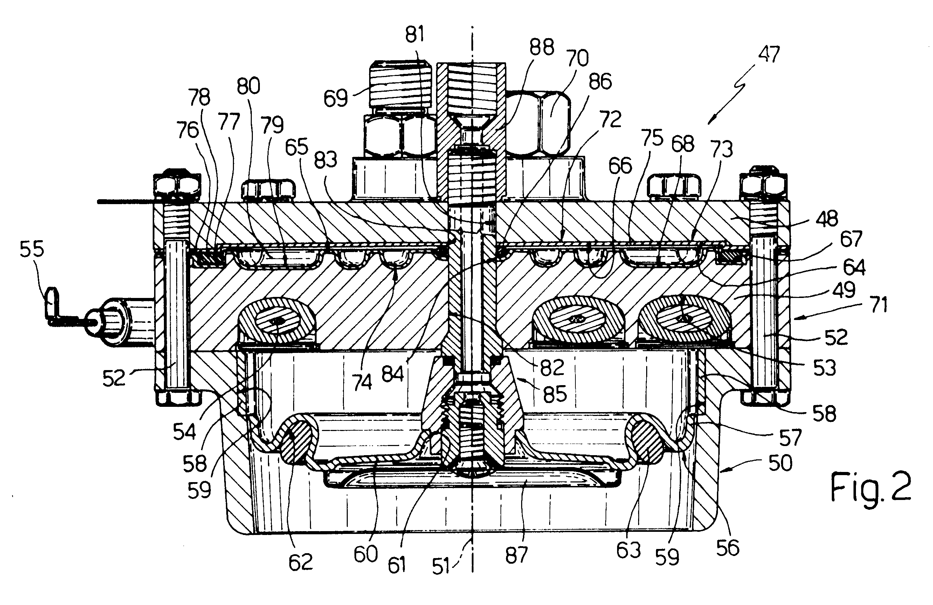

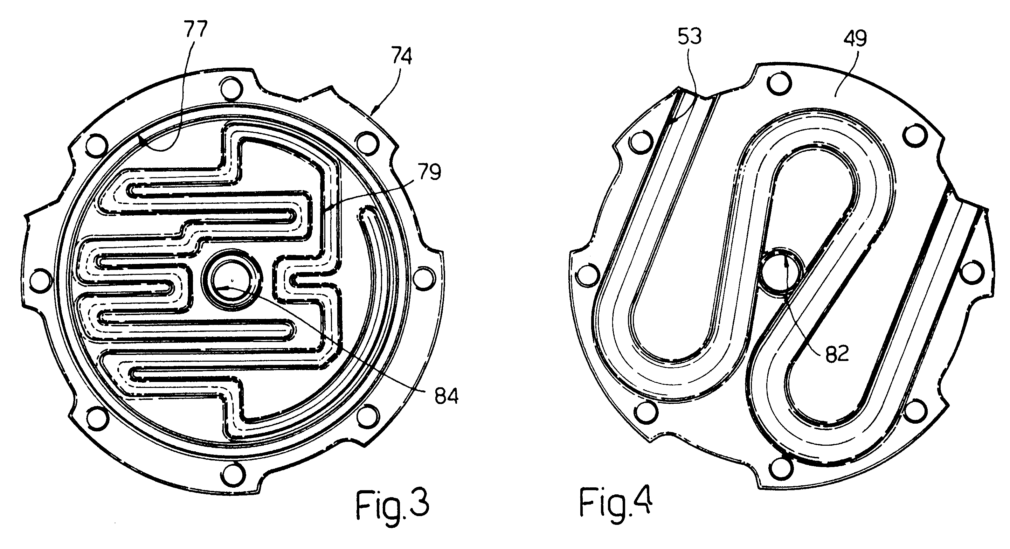

The above also applies to the embodiment in Figures 2 to 4, which show a "dry" boiler 47 comprising a top half shell 48, a bottom half shell 49, and a tubular body 50, all coaxial with a common axis 51, and all made of good heat conducting metal such as aluminium or aluminium alloy. Half shells 48 and 49 are in the form of circular disks, and are gripped together and to tubular body 50 by means of a number of through screws 52, with bottom half shell 49 between half shell 48 and tubular body 50.

Half shell 49 presents a bottom groove 53 in which is embedded a shielded resistor 54 with its terminals 55 outside groove 53.

Tubular body 50 houses a cup-shaped body 56 made of stainless steel and with its concavity facing half shell 49. Body 56 comprises a substantially cylindrical lateral wall 57 having outer longitudinal ribs 58 engaged inside respective longitudinal grooves 59 on the inner surface of tubular body 50; and a bottom wall 60 having a hole 61, and the outer periphery of which is undulated to define a circular groove 62 housing a seal 63 for ensuring fluidtight connection of wall 60 to the edge (not shown) of the filter cup (not shown).

Half shells 48 and 49 present respective surfaces 64 and 65 facing each other and in turn respectively presenting a central cavity 66, and a circular groove 67 extending about a coiled groove 68, the ends of which communicate, via through holes (not shown) formed in half shell 48, with an inlet fitting 69 for the water to be heated, and an outlet fitting 70 for the hot water. Half shells 48 and 49 define a casing 71 having a liner 72 made of stainless steel or other inoxidizable heat-resistant material and defined by a first and second half shell 73 and 74 contacting surfaces 64 and 65.

More specifically, half shell 73 presents a substantially flat central portion 75 contacting the bottom surface of cavity 66 and surrounded by a peripheral portion 76 in the form of a circular ring; while half shell 74 presents a peripheral groove 77 corresponding with groove 67 and housing a seal 78 cooperating in sealing manner with portion 76 of half shell 73, and a coiled groove 79 corresponding with groove 68. Half shells 73 and 74 define a chamber or conduit 80 communicating with fittings 69 and 70 via through holes (not shown) formed in portion 75 of half shell 73.

Half shells 48, 49, 73 and 74 present respective through holes 81, 82, 83 and 84 coaxial with hole 61 and axis 51, and engaged by a tubular element 85 fitted through chamber 80 via the interposition of an annular seal 86. The bottom end of tubular element 85 is force fitted through hole 61 and fitted with a filtering trough 87 at the bottom; and the top end of tubular element 85 is defined by a fitting 88 located over half shell 48 and connectable to fitting 70 by a known distributor (not shown) for feeding hot water over trough 87.

## Claims

1. A boiler for machines for making hot infused beverages, particularly espresso coffee, and comprising at least a hollow body (2)(71) made of good heat conducting metal and presenting a chamber (37)(80) containing water for heating; and at least a shielded electric resistor (13)(54) for heating said water; characterized by the fact that it also comprises a liner (21)(72) defining said chamber (37)(80); the liner (21)(72) being made of substantially inoxidizable material; and said electric resistor (13)(54) being located outside said liner (21)(72).

2. A boiler as claimed in Claim 1, characterized by the fact that said hollow body (2)(71) comprises a first (3)(48) and second (4)(49) half shell connected to each other in sealed manner.

3. A boiler as claimed in Claim 2, characterized by the fact that said liner (21)(72) is defined by a third (22)(73) and fourth (23)(74) half shell connected to each other in sealed manner.

4. A boiler as claimed in Claim 3, characterized by the fact that said third (22)(73) and fourth (23)(74) half shells are made of stainless steel.

5. A boiler as claimed in any one of the foregoing Claims, characterized by the fact that it is a so-called "wet" boiler (1) wherein said chamber (37) contains a given substantially static quantity of water for heating.

6. A boiler as claimed in any one of the foregoing Claims from 1 to 5, characterized by the fact that it is a so-called "dry" boiler (47) wherein said chamber (80) is a conduit along which the water for heating flows.
